# EUROPÄISCHE PATENTSCHRIFT

(11) **EP 0 944 637 B1**
(45) Veröffentlichungstag und Bekanntmachung des Hinweises auf die Patenterteilung: **10.04.2002**
(21) Anmeldenummer: 97952857.7
(22) Anmeldetag: 02.12.1997
(51) Int. Cl.: C07F 9/30, C08K 5/5313

(54) **VERFAHREN ZUR HERSTELLUNG VON ALUMINIUMSALZEN VON DIALKYLPHOSPHINSÄUREN UND DIPHOSPHINSÄUREN**
PROCESS FOR PREPARING ALUMINIUM SALTS OF DIALKYLPHOSPHINIC ACIDS AND DIPHOSPHINIC ACIDS
PROCEDE DE PREPARATION DES SELS D'ALUMINIUM D'ACIDES DIALKYLPHOSPHINIQUES ET D'ACIDES DIPHOSPHINIQUES

(30) Priorität: 13.12.1996 DE 19652009
(43) Veröffentlichungstag der Anmeldung: 29.09.1999
(73) Patentinhaber: Ticona GmbH, 65451 Kelsterbach (DE)
(72) Erfinder: KLEINER, Hans-Jerg, D-61476 Kronberg (DE)
(86) Internationale Anmeldenummer: EP9706743
(87) Internationale Veröffentlichungsnummer: WO9825937

(56) Entgegenhaltungen:
- EP-A- 0 699 708
- EP-A- 0 803 508
- WO-A-98/13371
- WO-A-98/20012
- DE-A- 1 962 943
- DE-C- 1 961 602
- FR-A- 1 558 606

## Beschreibung

Die Erfindung betrifft ein Verfahren zur Herstellung von Aluminiumsalzen von Dialkylphosphinsäuren und Diphosphinsäuren.

Aluminiumsalze von Phosphinsäuren stellen wertvolle Flammschutzmittel für Formmassen von Polyester und Polyamid dar. Ihre Herstellung erfolgt aus den Phosphinsäuren in wäßriger Lösung mit Metallcarbonaten, Metallhydroxiden oder Metalloxiden (EP-A2-0 699 708).

Nach dem Stand der Technik werden Phosphinsäureester zur Verseifung bei 180°C unter Druck mit überschüssigem Wasser nur dann in die entsprechenden Phosphinsäuren in guten Ausbeuten umgewandelt, wenn aus der Gasphase des Autoklaven der gebildete Alkohol im Gemisch mit Wasser entfernt wird (Houben-Weyl, Methoden der organischen Chemie 1982, Band E2, Seite 142; DE-A1-27 45 982).

Es wurde nun bereits gefunden, daß die Aluminiumsalze von Phosphinsäuren unter Druck aus den entsprechenden Estern mit Wasser und Aluminiumhydroxyd in guten Ausbeuten hergestellt werden können (DE 196 294 32.0).

Nachteilig bei diesem technisch wertvollen Verfahren ist die relativ lange Reaktionsdauer, insbesondere bei Verwendung längerkettiger Ester. So verseifen z.B. die Butylester deutlich langsamer als die Methylester, sie sind jedoch einfacher herstellbar als Methylester.

Es bestand die Aufgabe, ein Verfahren zu finden, das die vorstehend genannten Nachteile nicht aufweist und sich technisch ohne großen Aufwand und unter Verwendung leicht zugänglicher Hilfsstoffe realisieren läßt. Darüber hinaus soll das Verfahren die gewünschten Produkte sowohl in hoher Ausbeute als auch in hoher Reinheit zugänglich machen.

Diese Aufgabe wird überraschenderweise gelöst durch ein Verfahren zur Herstellung von Aluminiumsalzen von Dialkylphosphinsäuren der Formel (I) oder Diphosphinsäuren der Formel (II) 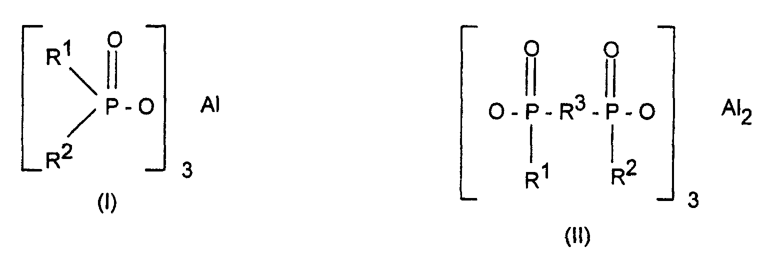 worin
- R¹, R²: einen linearen oder verzweigten C₁-C₈-Alkylrest, vorzugsweise einen linearen oder verzweigten C₁-C₄-Alkylrest, wie z.B. Methyl, Ethyl, n-Propyl, iso-Butyl, n-Butyl, n-Hexyl, Phenyl und
- R³: einen linearen oder verzweigten C₁-C₁₀-Alkylenrest, vorzugsweise einen linearen oder verzweigten C₁-C₄-Alkylenrest, wie z.B. Methylen, Ethylen, n-Propylen, iso-Propylen, n-Butylen, n-Decylen oder einen Arylenrest, wie z.B. Phenylen, Naphthylen; oder einen Alkylarylenrest, wie z.B. Methylphenylen, Ethylphenylen, Methylphenylenmethyl oder
einen Arylalkylenrest, z.B. Phenyl-methylen, Phenylethylen
bedeuten, dadurch gekennzeichnet, daß ein Dialkylphosphinsäureester der Formel (III) oder ein Diphosphinsäureester der Formel (IV) 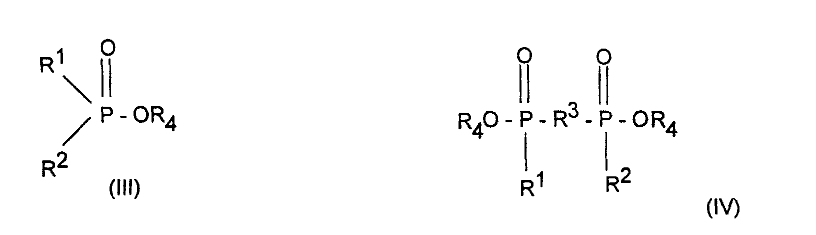 worin R¹, R² und R³ die oben angegebene Bedeutung haben und R⁴ ein linearer oder verzweigter C₁-C₈-Alkylrest, vorzugsweise ein linearer oder verzweigter C₄-C₆-Alkylrest ist,
in Gegenwart einer gesättigten aliphatischen Monocarbonsäure mit insgesamt 1 bis 7 Kohlenstoffatomen mit Aluminiumhydroxid bei einer Temperatur 150 bis 350°C umgesetzt werden.

Überraschenderweise können nach dem erfindungsgemäßen Verfahren die Reaktionszeiten deutlich vermindert werden. Dabei fallen die Aluminiumphosphinate in hoher Reinheit und hoher Ausbeute an. Das Verfahren ist technisch einfach, da zur Erzielung der hohen Ausbeute keine Nebenprodukte, wie z.B. die aus den Monocarbonsäuren entstehenden Ester, aus der Reaktionsmischung entfernt werden müssen.

Als Dialkylphosphinsäureester kommen für die Herstellung der Aluminiumsalze insbesondere in Frage: Dimethylphosphinsäure-methylester, Ethylmethylphosphinsäure-ethylester, Ethylmethylphosphinsäure-isobutylester, Methylpropylphosphinsäure-n-butylester, Isobutyl-methylphosphinsäureamylester, Hexyl-methylphosphinsäureiso-propylester, Methyl-oktylphosphinsäure-n-butylester, Methyl-phenylphosphinsäure-n-butylester, Diphenylphosphinsäure-n-pentylester, Als Diphosphinsäureester kommen für die Herstellung der Aluminiumsalze insbesondere in Frage: Hexan-1,6-di-(methylphosphin-säure-n-butylester), Benzol-1,4-(dimethylphosphinsäureisobutylester).

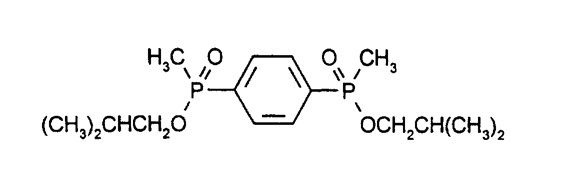

Dialkylphosphinsäureester und Diphosphinsäureester werden nachstehend zusammen Phosphinsäureester genannt.

Gesättigte, aliphatische Monocarbonsäure sind beispielsweise Ameisensäure, Essigsäure, Propionsäure, n-Buttersäure, i-Buttersäure, n-Valeriansäure, i-Valeriansäure oder Mischungen dieser Säuren. Besonders geeignet sind Essigsäure oder Propionsäure oder Mischungen derselben.

Phosphinsäureester, aliphatische Monocarbonsäuren und Aluminiumhydroxid sind bekannte gängige Verbindungen die als marktübliche Handelsprodukte erhältlich oder über bekannte Herstellverfahren nach dem Stand der Technik leicht zugänglich sind.

Die aliphatischen Monocarbonsäuren werden zweckmäßigerweise in einer Menge von etwa 50 - 300 Gew.-%, vorzugsweise 80 - 150 Gew.-%, jeweils bezogen auf den eingesetzten Phosphinsäureester eingesetzt. Gegebenfalls kann die Reaktionsmischung zusätzlich Wasser enthalten. Dabei sollte das Verhältnis von Monocarbonsäure : Wasser im Bereich von 50 : 50 bis 100 : 50 liegen.

Das Verfahren vorliegender Erfindung wird im allgemeinen so durchgeführt, daß die entsprechenden Phosphinsäureester mit der aliphatischen Monocarbonsäure und gegebenenfalls Wasser und stöchiometrischen Mengen Aluminiumhydroxyd, in einem Autoklaven auf eine Temperatur von 150 bis 350°C, vorzugsweise 180 bis 250°C, zweckmäßig unter ständigem Rühren, erhitzt werden. Zur Umsetzung der Phosphinsäureester zu den entsprechenden Aluminiumsalzen wird die Reaktionsmischung zweckmäßig 5 bis 25h, vorzugsweise zwischen 5 und 10 Stunden gerührt. Die Reaktionszeiten hängen dabei von der Kettenlänge der Estergruppen der Phosphinsäureester ab. Methylester reagieren z.B. schneller als die Butylester. Während der Reaktion steigt der Druck im Autoklaven auf Werte im Bereich von 5 bis 250 bar, vorzugsweise 10 bis 100 bar, insbesondere 10 bis 50 bar an. Gegen Ende der Reaktion bleibt der Druck in etwa konstant. Nach Beendigung der Umsetzung wird die Reaktionsmischung abgekühlt und anschließend die Aluminiumphosphinate abgesaugt. Abschließend werden die entstandenen Aluminiumphosphinate getrocknet.

Überraschender Weise wurde gefunden, daß die aus der Umsetzung entstehenden Monocarbonsäureester nicht aus dem Reaktionsgemisch entfernt werden müssen, um eine gute Ausbeute in Bezug auf die Aluminiumphosphinate zu erzielen. Gleiches gilt wenn der Reaktionsmischung zusätzlich Wasser hinzugefügt wird. Auch in diesem Fall kann auf die Entfernung des entstehenden Monocarbonsäure/Alkoholgemisches verzichtet werden.

### Beispiel 1

49,2 g (0,3 Mol) Ethyl-methylphosphinsäure-n-butylester, 55 ml Essigsäure, 25 ml Wasser und 7,8 g (0,1 Mol) Aluminiumhydroxid werden in einen 200 ml Hastelloy-Autoklaven gefüllt und 20 Stunden bei 220°C gehalten. Der Druck steigt bis 25 bar. Dann wird gekühlt, abgesaugt, mit Essigsäure gewaschen und bei 140°C im Vakuum-Trockenschrank getrocknet. Man erhält 31,5 g Aluminiumsalz der Ethyl-methylphosphinsäure. Das Filtrat wird im Vakuum von Lösungsmitteln befreit und der Rückstand mit Wasser digeriert. Man erhält weitere 2 g, insgesamt 33,5 g. Das entspricht einer Ausbeute von 96 % der Theorie.

### Beispiel 2

49,2 g (0,3 Mol) Ethyl-methylphosphinsäure-n-butylester, 80 ml Essigsäure, 7,8 g (0,1 Mol) Aluminiumhydroxid werden in einen 200 ml Hastelloy-Autoklaven gefüllt und 10 Stunden bei 220°C gehalten. Der Druck steigt bis 24 bar. Dann wird gekühlt, abgesaugt, gewaschen und bei 140°C im Vakuum-Trockenschrank getrocknet. Man erhält 32 g Aluminiumsalz der Ethyl-methylphosphinsäure. Das entspricht einer Ausbeute von 92 % der Theorie.

### Beispiel 3

53,4 g (0,3 Mol) Methyl-propylphosphinsäure-n-butylester, 55 ml Essigsäure und 25 ml Wasser sowie 7,8 g (0,1 Mol) Aluminiumhydroxid werden in einen 200 ml Hastelloy-Autoklaven gefüllt und 20 Stunden bei 200°C gehalten. Der Druck steigt bis 16 bar. Dann wird wie in Beispiel 2 aufgearbeitet. Man erhält 33 g Aluminiumsalz der Methyl-propylphosphinsäure. Das entspricht einer Ausbeute von 85 % der Theorie.

### Beispiel 4

65,6 g (0,4 Mol) Ethyl-methylphosphinsäure-n-butylester, 55,2 g Ameisensäure und 10,4 g (0,133 Mol) Aluminiumhydroxid werden in einen 200 ml Hastelloy-Autoklaven gefüllt und über eine Zeitdauer von 1,5 Stunden auf 190°C gebracht. Der Druck beträgt bei 190°C 24 bar. Anschließend wird die Reaktionsmischung 3 Stunden bei 200°C gehalten, der Druck steigt dabei bis auf 132 bar. Anschließend wird gekühlt, bei Raumtemperatur beträgt der Druck jetzt 56 bar. Nach üblicher Aufarbeitung erhält man 35 g Aluminiumsalz der Ethyl-methylphosphinsäure. Das Filtrat wird im Vakuum von Leichtsiedern befreit. Es verbleiben nach Trocknung weitere 6 g. insgesamt beträgt die Ausbeute damit 89 % der Theorie.

## Patentansprüche

1. Verfahren zur Herstellung von Aluminiumsalzen von Dialkylphosphinsäuren (I) oder alkylierten Diphosphinsäuren der Formel (II) 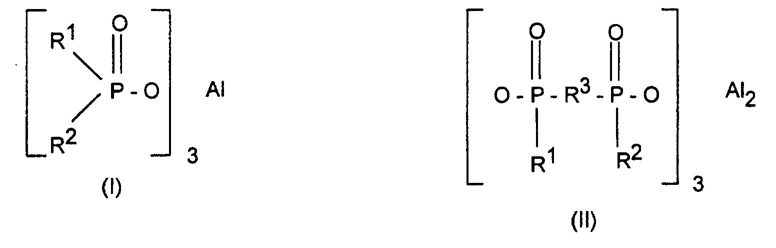 worin
R¹, R² einen linearen oder verzweigten C₁-C₈-Alkylrest und
R³ einen linearen oder verzweigten C₁-C₁₀-Alkylenrest oder
einen Arylenrest oder
einen Alkylarylenrest oder
einen Arylalkylenrest,
bedeuten,
**dadurch gekennzeichnet, daß** ein Dialkylphosphinsäureester der Formel (III) oder ein Diphosphinsäureester der Formel (IV) 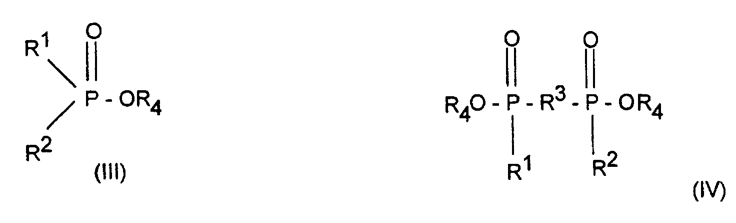 worin
R¹, R² und R³ die oben angegebene Bedeutung haben und
R⁴ ein linearer oder verzweigter C₁-C₈-Alkylrest ist,
in Gegenwart einer gesättigten aliphatischen Monocarbonsäure mit insgesamt 1 bis 7 Kohlenstoffatomen mit Aluminiumhydroxid bei einer Temperatur 150 bis 350°C umgesetzt wird.

2. Verfahren nach Anspruch 1, **dadurch gekennzeichnet, daß**
R1 und R2 einen linearen oder verzweigten C₁-C₄-Alkylrest und
R3 einen linearen oder verzweigten (C₁-C₄)-Alkylenrest oder Phenylen bedeuten.

3. Verfahren nach einem oder mehreren der Ansprüche 1 bis 2, **dadurch gekennzeichnet, daß** die Monocarbonsäure Essigsäure oder Propionsäure oder Mischungen dieser Säuren ist.

4. Verfahren nach einem oder mehreren der Ansprüche 1 bis 3, **dadurch gekennzeichnet, daß** der Reaktionsmischung zusätzlich Wasser zugefügt wird.

5. Verfahren nach einem oder mehreren der Ansprüche 1 bis 4, **dadurch gekennzeichnet, daß** die Reaktion in einem geschlossenen druckbeständigen Reaktionsgefäß, vorzugsweise in einem Autoklaven, durchgeführt wird.

6. Verfahren nach einem oder mehreren der Ansprüche 1 bis 5, **dadurch gekennzeichnet, daß** während der Umsetzung der Druck im Reaktionsgefäß ansteigt.

7. Verfahren nach einem oder mehreren der Ansprüche 1 bis 6, **dadurch gekennzeichnet, daß** der Druck während der Umsetzung auf Werte in einem Bereich von 5 bis 250 bar, vorzugsweise 10 bis 100 bar ansteigt.

8. Verfahren nach einem oder mehreren der Ansprüche 1 bis 7, **dadurch gekennzeichnet, daß** während des Ablaufs der Reaktion keine durch die Umsetzung entstandenen Monocarbonsäureester und gegebenenfalls kein entstehender Alkohol aus dem Reaktionsgefäß entfernt werden.

## Claims

1. A process for preparing aluminum salts (I) of dialkylphosphinic acids or (formula (II)) of alkylated diphosphinic acids 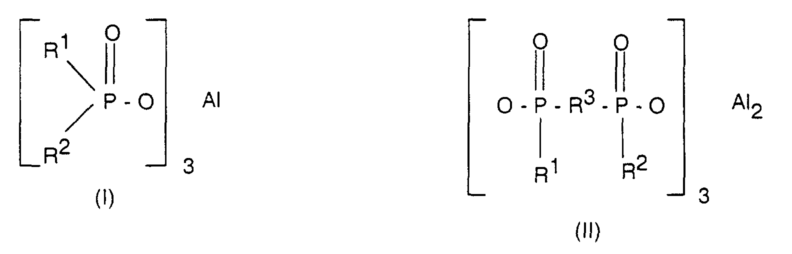 where
R¹ and R² are a linear or branched C₁-C₈-alkyl radical and
R³ is a linear or branched C₁-C₁₀-alkylene radical or
an arylene radical or
an alkylarylene radical or
an arylalkylene radical,
which comprises reacting a dialkylphosphinic acid ester of the formula (III) or a diphosphinic acid ester of the formula (IV) 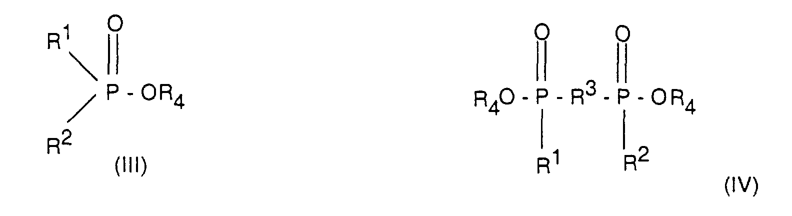 where
R¹, R² and R³ are as defined above and
R⁴ is a linear or branched C₁-C₈-alkyl radical,
in the presence of a saturated aliphatic monocarboxylic acid having a total of from 1 to 7 carbon atoms, with aluminum hydroxide at a temperature of from 150 to 350°C.

2. The process as claimed in claim 1, wherein
R¹ and R² are a linear or branched C₁-C₄-alkyl radical and
R³ is a linear or branched (C₁-C₄)-alkylene radical or phenylene.

3. The process as claimed in one or more of claims 1 to 2, wherein the monocarboxylic acid is acetic acid or propionic acid or mixtures of these acids.

4. The process as claimed in one or more of claims 1 to 3, wherein, additionally, water is added to the reaction mixture.

5. The process as claimed in one or more of claims 1 to 4, wherein the reaction is carried out in a closed pressure-resistant reaction vessel, preferably in an autoclave.

6. The process as claimed in one or more of claims 1 to 5, wherein the pressure increases in the reaction vessel during the reaction.

7. The process as claimed in one or more of claims 1 to 6, wherein the pressure increases during the reaction to values in a range from 5 to 250 bar, preferably from 10 to 100 bar.

8. The process as claimed in one or more of claims 1 to 7, wherein, during the course of the reaction, no monocarboxylic esters produced by the reaction and, where appropriate, no alcohol produced, are removed from the reaction vessel.

## Revendications

1. Procédé pour la préparation de sels d'aluminium d'acides dialkylphosphiniques (I) ou d'acides diphosphiniques alkylés de formule (II) 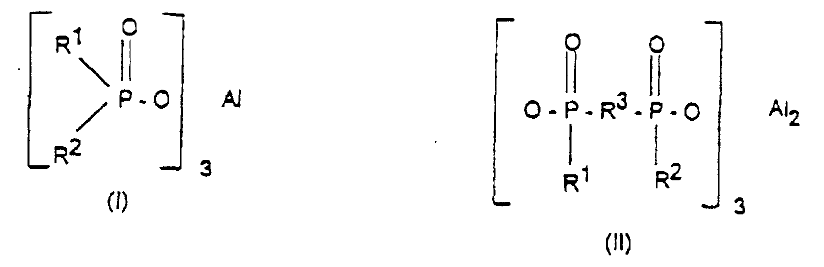 formules dans lesquelles
R¹, R² représentent un radical alkyle en C₁-C₈ linéaire ou ramifié et
R³ représente un radical alkylène en C₁-C₁₀ linéaire ou ramifié ou
un radical arylène ou
un radical alkylarylène ou
un radical arylalkylène,
**caractérisé en ce qu'**on fait réagir un ester d'acide dialkylphosphinique de formule (III) ou un ester d'acide diphosphinique de formule (IV) 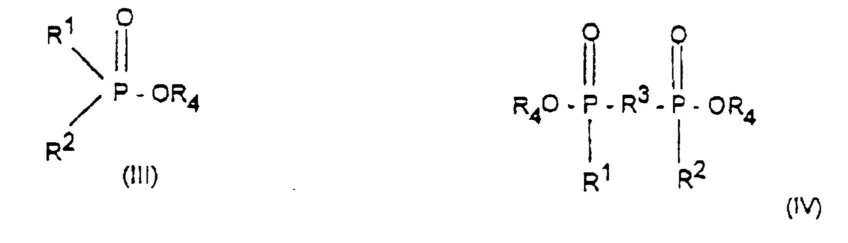 formules dans lesquelles
R¹, R² et R³ ont les significations données plus haut et
R⁴ est un radical alkyle en C₁-C₈ linéaire ou ramifié,
en présence d'un acide monocarboxylique aliphatique saturé ayant au total 1 à 7 atomes de carbone, avec de l'hydroxyde d'aluminium à une température de 150 à 350°C.

2. Procédé selon la revendication 1, **caractérisé en ce que**
R¹ et R² représentent un radical alkyle en C₁-C₄ linéaire ou ramifié et
R³ représente un radical alkylène en C₁-C₄ linéaire ou ramifié ou phénylène.

3. Procédé selon une ou plusieurs des revendications 1 et 2, **caractérisé en ce que** l'acide monocarboxylique est l'acide acétique ou l'acide propionique ou des mélanges de ces acides.

4. Procédé selon une ou plusieurs des revendications 1 à 3, **caractérisé en ce qu'**on ajoute en outre de l'eau au mélange réactionnel.

5. Procédé selon une ou plusieurs des revendications 1 à 4, **caractérisé en ce que** la réaction est effectuée dans un récipient de réaction fermé tenant la pression, de préférence dans un autoclave.

6. Procédé selon une ou plusieurs des revendications 1 à 5, **caractérisé en ce que** la pression augmente dans le récipient de réaction pendant la réaction.

7. Procédé selon une ou plusieurs des revendications 1 à 6, **caractérisé en ce que** la pression augmente pendant la réaction à des valeurs dans une plage de 5 à 250 bars, de préférence de 10 à 100 bars.

8. Procédé selon une ou plusieurs des revendications 1 à 7, **caractérisé en ce que** pendant le déroulement de la réaction aucun ester d'acide monocarboxylique résultant de la réaction et éventuellement aucun alcool résultant ne sont éliminés du récipient de réaction.
